# EUROPÄISCHE PATENTSCHRIFT

(11) **EP 3 967 146 B1**
(45) Veröffentlichungstag und Bekanntmachung des Hinweises auf die Patenterteilung: **25.10.2023**
(21) Anmeldenummer: 21196398.8
(22) Anmeldetag: 13.09.2021
(51) Int. Cl.: A22C 11/10

(54) **PORTIONIERVORRICHTUNG UND -VERFAHREN**
PORTIONING DEVICE AND METHOD
DISPOSITIF ET PROCÉDÉ DE DIVISION EN PORTIONS

(30) Priorität: 15.09.2020 DE 102020124001
(43) Veröffentlichungstag der Anmeldung: 16.03.2022
(73) Patentinhaber: VEMAG Maschinenbau GmbH, 27283 Verden/Aller (DE)
(72) Erfinder: Hagedorn, Jan-Nils, 27283 Verden (DE); Lewin, Alexander, 27283 Verden (DE)
(74) Vertreter: Eisenführ Speiser

(56) Entgegenhaltungen:
- EP-A1- 1 112 691
- EP-A1- 1 902 622
- GB-A- 2 299 742
- US-A- 3 964 128
- US-A- 4 614 005

## Beschreibung

Die Erfindung betrifft eine Portioniervorrichtung zum Portionieren und Transportieren von mit Masse befüllten, länglichen Hüllen, insbesondere mit Wurstbrät gefüllte Kunst- oder Naturdärme, gemäß den Merkmalen des Oberbegriffs von Anspruch 1.

Die Erfindung betrifft weiterhin einen Abteiler für eine Portioniervorrichtung sowie ein Verfahren zum Portionieren.

Bei bekannten Verfahren und Vorrichtungen zur Herstellung von Würstchen werden mithilfe einer Pumpe oder einer Füllmaschine und Portioniervorrichtung Kunst- oder Naturdärme mit pastöser Masse wie beispielsweise Fleischbrät befüllt und portioniert; auf gleiche Weise werden auch andere Massen in eine Hülle gefüllt. Die Masse wird oft durch eine Füllmaschine mit Fülltrichter und Förderpumpe bereitgestellt. Bei bekannten Verfahren wird mittels einer Abdreheinrichtung und der Portioniervorrichtung eine Abdrehstelle in der Darm-Hülle erzeugt, die einzelne Portionen von Würstchen voneinander abgrenzt.

Derartige Portioniervorrichtungen werden häufig als Längenportioniergerät bezeichnet, wobei Portionen oder Würstchen gleicher Mengen oder gleicher Längen erzeugt werden. Ein Beispiel eines solchen Längenportioniergerätes besteht im Wesentlichen aus zwei parallelen, umlaufenden Ketten oder Bändern, die abschnittsweise in einem Transportbereich mit gleicher Geschwindigkeit in eine Transportrichtung parallel laufen und in einem zwischen den beiden Ketten oder Bändern ausgebildeten Zwischenraum den befüllten Darm führen.

In Abständen von etwa der Länge eines Würstchens weisen die Ketten oder Bänder seitlich abstehende Abteiler auf, die jeweils paarweise mit einem im Betrieb gegenüberliegenden Abteiler der benachbarten Kette bzw. des benachbarten Transport-Bandes zusammenlaufen und dabei gemeinsam die befüllte Darm-Hülle einschnüren an einer Eingriffsstelle oder Einschnürstelle. Aufgrund einer Rotationsbewegung der gefüllten Hülle um die Längsachse und dem Eingriff der Abteiler an der Eingriffsstelle wird die Rotation im Bereich der Eingriffstelle verringert, und es startet die Bildung einer Abdrehstelle. Zwischen den Abteilern befinden sich - im Vergleich zu den Abteilern weniger weit abstehende - Führungselemente an den Ketten oder Bändern, die den befüllten Darm stützen oder führen. Bei bekannten Längenportioniergeräten sind die Abteiler und die Führungselemente üblicherweise auf die Kette bzw. das Band geklebt, genietet, geschraubt oder formschlüssig beispielsweise mittels einer Rastverbindung angebracht. Diese Systeme werden auch Abteilerketten oder Abteilerbänder genannt.

Auch sind Vorrichtungen bekannt, bei denen die Abteiler statt an Ketten oder Bändern an rotierenden Wellen befestigt sind, wobei zwei Wellen im Wesentlichen parallel zueinander angeordnet sind und die Abteiler benachbarter Wellen synchron rotieren und beim hindurch transportieren eines Wurststranges oder einer anderweitig mit Lebensmittel-Masse gefüllten Hülle eine Eingriffsstelle bilden.

US 3 964 128 A, EP 1 112 691 A1 oder US 4 614 005 A offenbaren jeweils Vorrichtungen zum Abteilen schlauchförmiger Hüllen mit zwei auf einander gegenüberliegenden Seiten der Hülle angeordneten Transportelementen. Die Transportelemente weisen mehrere Abteiler auf, die in vorbestimmten Abständen entlang der Transportelemente angeordnet sind und durchgehend schräg verlaufende Einschnürabschnitte aufweisen.

GB 2 229 742 A offenbart eine Vorrichtung zum Abteilen schlauchförmiger Hüllen, deren Abteiler an ihren auf einander gegenüberliegenden Seiten der Hülle angeordneten Transportelementen Einschnürabschnitte aufweisen, die gegenüber einer rechtwinklig zur Transportrichtung aufgespannten Ebene durchgehend parallel verlaufen.

Den Abteilern kommt hinsichtlich der Zuverlässigkeit und Effizienz der Produktionsbildung eine besondere Bedeutung zu. Probleme bei der Wurstherstellung bekannter Portioniervorrichtungen oder- systeme mit Abteilbändern oder Abteilketten oder Verdränger bestehen in der begrenzt verfügbaren Zeit für das Eindringen der Abteiler im Bereich der Eingriffsstelle, für die genaue Platzierung der Abdrehstelle, was für die Erreichung des Ziels gleicher Wurstlängen von Bedeutung ist, sowie in der aufgebrachten Belastung auf die Wursthülle. Die Bildung der Abdrehstelle wird mit Steigerung der Geschwindigkeit des Prozesses, der Ausstoßgeschwindigkeit, für den Darm belastender. Die Zeit zur Bildung der Abdrehstelle wird verkürzt. Es kann zu ungewollten Zwischenabdrehungen kommen. Diese werden durch Erhöhung der Bremsspannung versucht auszugleichen. Diese erhöhte Bremsspannung sorgt jedoch auch für eine höhere Darmbelastung und Darmplatzer.

Der Erfindung liegt daher die Aufgabe zugrunde, eine Portioniervorrichtung und einen Abteiler sowie ein Portionierverfahren bereitzustellen, die den oben genannten und weiteren Problemen entgegenwirken und insbesondere eine zuverlässige, die Hülle schonende Ausbildung von Abdrehstellen ermöglichen.

Die Erfindung löst die ihr zugrundeliegende Aufgabe bei einer Portioniervorrichtung der eingangs genannten Art mit den Merkmalen von Anspruch 1.

Durch einen erfindungsgemäßen Abteiler mit einem im Betrieb im Wesentlichen schräg verlaufenden - ersten - Einschnürabschnitt ist der Eingriff zwischen dem Abschnitt und der gefüllten Hülle, also insbesondere einem Wurststrang, welcher durch einen Natur- oder Kunstdarm und Wurstbrät gebildet ist, verbessert. Der Einschnürabschnitt verläuft schräg gegenüber einer theoretischen, rechtwinklig zur Transportrichtung aufgespannten Ebene. Nachfolgend wird der Begriff Wurststrang synonym verwendet für eine längliche Hülle, welche mit einer vorzugsweise pastösen Masse wie beispielsweise Wurstbrät oder anderen Lebensmitteln gefüllt ist. Bei einer erfindungsgemäßen Portioniervorrichtung wirken in der Regel zwei synchron bewegte Abteiler zusammen, die jeweils an einem der beabstandeten Transportbänder angeordnet sind. Zwei zusammenwirkende Abteiler sind so an dem Transportband befestigt, dass sie in dem zwischen den beiden Transportbändern angeordneten Transportbereich aufeinander zu bewegt werden und dann in den Transportbereich in Transportrichtung weiterbewegt werden. Durch das aufeinander Zubewegen und in der Regel Ineinandergreifen der beiden Abteiler greifen die Abteiler an einer Eingriffsstelle ineinander, schnüren den Wurststrang ein und generieren eine Art Abgrenzung von Portionen in dem Wurststrang. Dadurch, dass in der Regel der Wurststrang auch um seine Längsachse rotiert entsteht so eine Abdrehstelle. Durch das sukzessive Aufbringen mehrerer solcher Abdrehstellen entstehen im Wesentlichen portionierte, etwa gleich lange Portionen. Im Betrieb sind die Transportbänder vorzugsweise im Wesentlichen in einer gemeinsamen Ebene, vorzugsweise einer horizontalen Ebene oder leicht geneigt gegenüber einer horizontalen Ebene angeordnet. Die Einschnürabschnitte der Abteiler verlaufen im Betrieb schräg gegenüber der rechtwinklig zur Transportrichtung aufgespannten Ebene, welche beispielsweise im Wesentlichen vertikal angeordnet sein kann. Während des Eintauchens der Abteilelemente in den Wurststrang werden das Wurstende und der neue Wurstanfang vorbestimmt. Dies ist der Beginn der Erzeugung einer (weiteren) Abdrehstelle. Vorzugsweise findet dieser Eingriff der schrägen Einschnürabschnitte in einem durch ein Lager und einem Führungsrad gebildeten Umlenkbereich für das umlaufende Transportband statt. Dieser auch Einlaufbereich genannter Teil des Transportbereiches setzt also die Abdrehstelle. Erfindungsgemäß weisen die zusammenwirkenden Abteiler jeweils einen solchen schräg angeordneten Einschnürbereich auf, sodass anschließend auf dem geradlinigen Transportbereich das nachlaufende Ende der Wurstportion in Kontakt steht mit den zwei schrägen Einschnürbereichen der zusammenwirkenden gegenüberliegenden Abteiler. Erfindungsgemäß ist unter einem Transportband ein Endlos-Band aus Kunststoff, Metall, einem Gewebe aber auch eine Kette, ein Zahnriemen oder ein anderes gleichwirkendes Bauteil zu verstehen.

Der Abteiler ist so ausgeformt, dass ein Wurstende, also eine Portion der gefüllten Hülle, gegen eine schräge Fläche anliegt, während vorzugsweise die Wurstanfangsseite einer benachbarten Portion gegenüber einer geraden, im Wesentlichen ebenen Fläche (nahezu rechtwinklig zum Bandkörper) steht und sich an dieser anlegen kann. Durch die im Wesentlichen ebene Fläche des Abteilers am Wurstanfang, die radiale Eintauchbewegung des Abteiler in die Wursthülle (durch die Umlenkrolle), und einen damit verbunden "Schaufeleffekt" und einer bevorzugten anschließenden geradlinigen, linearen Bewegung der Abteiler, vorzugsweise entlang einer Strecke von mindestens 20 mm in Transportrichtung, kann die Rotationsreibung der Wursthülle gegenüber den Abteilern sehr stark reduziert werden. Dadurch bildet sich die Abdrehstelle wesentlich früher, schneller und schonender, wobei ein geringeres Drehmoment nötig ist. Dadurch, dass die Abteiler radial von dem Transportband abstehen, werden die äußeren Bereiche in dem Umlenkbereich, indem die Abteile auf einer Kreisbahn bewegt werden, beschleunigt gegenüber der linearen Bewegungsbahn im Transportbereich. Dadurch entsteht der erwähnte vorteilhafte "Schaufeleffekt".

Durch die erfindungsgemäße Geometrie, und gegenüber bekannten Abteilern Konturänderung, in Verbindung mit den oben beschriebenen erfindungsgemäßen Bedingungen kann die Abdrehstelle in kürzerer Zeit und mit geringerer Darmbelastung gebildet werden im Vergleich zu herkömmlichen Vorrichtungen und Verfahren. Die Bremsspannung kann reduziert und der Ausstoß der portionierten Produkte stark erhöht werden. Zwischenabdrehungen und Darmplatzer sind dadurch stark reduziert.

Entsprechend einer bevorzugten Ausgestaltung ist vorgesehen, dass der erste Einschnürabschnitt im Betrieb im Wesentlichen in einem Winkel von etwa 30° +/- 15° gegenüber einer vertikalen Ebene geneigt ist. Dadurch sind durch die jeweils schrägverlaufenden Einschnürungsabschnitte zweier zusammenwirkender Abteiler in einem Winkel zueinander angeordnete Einschnürabschnitte mit entsprechenden Oberflächen ausgebildet, die mit dem Ende der davor in Transportrichtung transportierten Wurstportionen in Kontakt kommen. Die beiden Einschnürabschnitte sind dabei in Kontakt mit dem Wurstende und hindern diese an einer Rotation und verzögern die Rotationsbewegung des Wurststrangs und unterstützen die Ausbildung der Abdrehstelle.

Bei einer bevorzugten Ausführungsform erstreckt sich der zweite Einschnürabschnitt im Betrieb im Wesentlichen entlang einer vertikalen Ebene. Durch die zweiten Einschnürabschnitte mit vertikal angeordneten Oberflächen entsteht auf der nachlaufenden Seite der beiden in Transportrichtung bewegten, teilweise ineinander verschränkten Abteiler eine im Wesentlichen gerade Oberfläche oder Begrenzung, eine Art ebene Wand oder Anschlag für den Wurstanfang, wo eine Abdrehstelle erzeugt wird. Auf dieser Seite der im Wesentlichen ebenen Oberfläche der beiden zusammenwirkenden Einschnürabschnitte entsteht eine vergleichsweise geringe Reibung oder mechanische Interaktion mit der Wursthülle und dem Beginn der folgenden Wurstportion. Dadurch ist die Bildung der Abdrehstelle auf eine schonende Art positiv begünstigt. Die Belastung auf den Darm ist reduziert. Die Bremsspannung ist reduziert. Zwischenabdrehungen und Darmplatzer werden erfindungsgemäß seltener auftreten.

Erfindungsgemäß schließt der erste plattenförmige Einschnürabschnitt und der zweite plattenförmige Einschnürabschnitt im Wesentlichen einen Winkel von 150° ± 15° ein. Auf diese Weise wird eine die Rotationsbewegung des Wurststranges bremsende Interaktion auf schonende Art und Weise unterstützt.

Gemäß einer bevorzugten weiteren Ausgestaltung ist vorgesehen, dass der erste und zweite Einschnürabschnitt sich ausgehend von einem unteren bzw. oberen Randabschnitt in Richtung auf einen die Einschnürabschnitte verbindenden Bereich hin verjüngen. Durch die Verjüngungen können die zusammenwirkenden Abteiler ineinander verschränkt werden und so die gefüllte Hülle einschnüren.

Zweckmäßigerweise weist der erste Einschnürabschnitt relativ zu dem zweiten Einschnürabschnitt eine größere Oberfläche auf. Eine vorteilhafte Asymmetrie des Abteilers entsteht dadurch, und so können die beiden Abteiler des einen und anderen Transportbandes auf vorteilhafte Weise ineinander verschränkt werden.

Entsprechend einer weiteren bevorzugten Ausgestaltung sind die an dem Transportband angeordneten Abteiler durch jeweils einen Umlenkbereich der Transportbänder im Wesentlichen auf einer Kreisbahn aufeinander zu bewegbar und bilden durch in Eingriff kommen mit der wenigstens teilweise um die Längsachse rotierenden befüllten Hülle eine Abdrehstelle, wobei sich an den Umlenkbereich ein im Wesentlichen geradliniger Abschnitt des Transportbereichs anschliesst. In dem Umlenkbereich liegt - aufgrund eines Radiuses des Umlenkbereichs - eine höhere Umfangsgeschwindigkeit der radial äußeren Teile des Einschnürabschnitts vor, sodass es zu einer Art Schaufeleffekt kommt, also ein verstärktes Eintauchen der Abteiler in die gefüllte Wursthülle. Anschließend auf der linearen Bewegungsbahn in Transportrichtung laufen die Abteiler dann wieder mit einer leicht reduzierten Geschwindigkeit und gelangen dann in einen weiteren Umlenkbereich, in dem die Abteiler in den Rücklaufbereich hineinbewegt werden.

Gemäß einer alternativen Ausführungsform sind die zwei kooperierenden Abteiler der benachbarten Transportbänder so ausgebildet, dass die ersten schräg verlaufenden Einschnürabschnitte der Abteiler in Transportrichtung gesehen jeweils vorlaufen und die zweiten Einschnürabschnitte jeweils nachlaufen.

Entsprechend einer weiteren alternativen, bevorzugten Ausgestaltung sind die beiden ersten Einschnürabschnitte der zusammenwirkenden Abteiler im Transportbereich im Wesentlichen in einem spitzen Winkel relativ zueinander angeordnet, wobei der Winkel vorzugsweise 120° ± 30° beträgt. So kann die Interaktion mit dem Wurstende optimiert werden.

Bei einer bevorzugten Ausführungsform sind die zweiten Einschnürabschnitte der zusammenwirkenden Abteiler im Transportbereich wenigstens teilweise im Wesentlichen innerhalb einer im Wesentlichen senkrecht verlaufenden Ebene oder in parallelen im Wesentlich senkrecht verlaufenden Ebenen angeordnet. So ist eine Art Anlagefläche für das vordere Ende einer nächsten Portion gebildet, ohne dass eine größere Reibung zwischen der rotierenden gefüllten Hülle und den Oberflächen der Wand entsteht.

Vorzugsweise sind der erste und zweite Einschnürabschnitt der Befestigungsabschnitt im Wesentlichen plattenförmig ausgebildet sind und der plattenförmige Befestigungsabschnitt im Wesentlichen weist eine rechteckige Form auf und verläuft im Wesentlichen parallel zu dem benachbarten Transportband, sodass insgesamt eine mechanisch günstige und herstellungstechnisch einfache Konstruktion der Abteiler verwirklicht ist.

Gemäß einer bevorzugten weiteren Ausgestaltung ist der Abteiler als im Wesentlichen integrales Bauteil, vorzugsweise aus einem Metall- oder Kunststoff, ausgebildet; wobei vorzugsweise der Abteiler einen Befestigungsabschnitt zum Befestigen an einem Transportband aufweist. Weitere vorteilhafte geometrische Gestaltungen sind die folgenden:
Zweckmäßigerweise ist, dass die Abteiler so ausgebildet sind, dass im Betrieb zwei miteinander zusammenwirkende Abteiler der jeweiligen Transportbänder im Einlaufbereich zunächst mit ihren jeweiligen schrägverlaufenden ersten plattenförmigen Einschnürabschnitten mit der gefüllten Hülle in Eingriff kommen und bei weiterer Reduktion des Abstandes der kooperierenden Abteiler relativ zueinander die Abdrehstelle ausbilden.

Entsprechend einer weiteren bevorzugten Ausgestaltung ist der erste und zweite Einschnürabschnitt der beiden kooperierenden Abteiler so ausgebildet und dimensioniert, dass sie im Betrieb im Transportbereich in einem zentralen Einbuchtungsbereich einen geringen Abstand zueinander aufweisen unter Ausbildung eines Hohlraumes zwischen den Abteilern.

Gemäß einer alternativen Ausführungsform sind die beiden kooperierenden Abteiler im Wesentlichen gleich ausgebildet sind, aber invers um 180° versetzt zueinander an den Transportbändern positioniert. Auf diese Weise lassen sich die Abteiler an den beiden Transportbändern um 180 verdreht anordnen und können so gut ineinandergreifen.

Entsprechend einer weiteren bevorzugten Ausgestaltung sind an jedem Transportband zwischen in Länge einer zu produzierenden Wurstportion beabstandeten, benachbarten Abteilern vorzugsweise mehrere Führungselemente angeordnet sind, die im Betrieb die gefüllte Hülle stützen. Erfindungsgemäß wird die Aufgabe auch gelöst durch einen Abteiler für eine

Portioniervorrichtung gemäß Anspruch 16, sowie eine Anordnung zum Herstellen von Portionen aus einer mit Lebensmittel-Masse zu füllenden Hülle gemäß Anspruch 17,
mit einer Füllmaschine mit einem Fülltrichter zum Aufnehmen der Lebensmittel-Masse und einer Förderpumpe,
einer Abdreheinrichtung mit einem Füllrohr zum Einfüllen der Lebensmittel-Masse mittels der Füllmaschine in die zu füllende Hülle und
einer Portioniervorrichtung nach mindestens einem der vorstehenden Ansprüche und es wird auf die beschriebenen Vorteile der Portioniervorrichtung verwiesen.

Gemäß eines weiteren Aspektes wird das Problem mit einem Verfahren gelöst zum Herstellen von Portionen in einer mit Lebensmittel-Masse gefüllten Hülle gemäß Anspruch 18, insbesondere mit
Wurstbrät gefüllte Kunst- oder Naturdärme, bei dem Lebensmittel-Masse mit einer Füllmaschine und einer Abdrehvorrichtung in die zu befüllende Hülle eingefüllt wird und die gefüllte, um ihre Längsachse rotierende Hülle in den Einlauf- und Transportbereich einer Portioniervorrichtung, vorzugsweise gemäß einem der vorstehenden Ansprüche, transportiert wird, wobei die Portioniervorrichtung zwei beabstandete Transportbänder mit jeweils mindestens einen an diesen befestigten Abteiler aufweist und die gefüllte Hülle in einem Einlaufbereich von aufeinander zu bewegten zusammenwirkenden Abteilern jeweils eines der Transportbänder erfasst wird zur Ausbildung einer Abdrehstelle, und wobei der Abteiler jeweils einen ersten Einschnürabschnitt aufweist, welcher im Betrieb im Wesentlichen schräg verläuft gegenüber einer rechtwinklig zur Transportrichtung aufgespannten Ebene, und einen zweiten Einschnürabschnitt aufweist, wobei der erste plattenförmige Einschnürabschnitt und der zweite plattenförmige Einschnürabschnitt einen Winkel von 150° ± 15° einschließen.

Die Erfindung wird nachstehend anhand eines Ausführungsbeispieles unter Bezugnahme auf die Figuren näher erläutert, es zeigen:
- Figur 1: eine Anordnung zum Herstellen von Portionen aus einer mit Lebensmittel-Masse gefüllten Hülle umfassend eine Füllmaschine, eine Abdrehvorrichtung und eine Portioniervorrichtung in einer perspektivischen Ansicht,
- Figur 2: die Anordnung aus Figur 1 in einer Draufsicht,
- Figur 3: ein Teil der Abdrehvorrichtung und Portioniervorrichtung in einer perspektivischen Ansicht,
- Figur 4: eine perspektivische Ansicht der Portioniervorrichtung mit zwei beabstandeten Transportbändern,
- Figur 5: eine perspektivische Ansicht der Portioniervorrichtung mit zwei beabstandeten Transportbändern,
- Figur 6: eine andere perspektivische Ansicht der Portioniervorrichtung mit zwei beabstandeten Transportbändern in einer Betriebsstellung,
- Figur 7: eine Draufsicht der Portioniervorrichtung mit zwei beabstandeten Transportbändern,
- Figur 8: zwei zusammenwirkende Abteiler in einer perspektivischen Ansicht,
- Figur 9: zwei Abteiler in einer Draufsicht,
- Figur 10: ein erfindungsgemäßer Abteiler in einer perspektivischen Ansicht,
- Figur 11: der Abteiler aus Figur 10 in einer Seitenansicht.

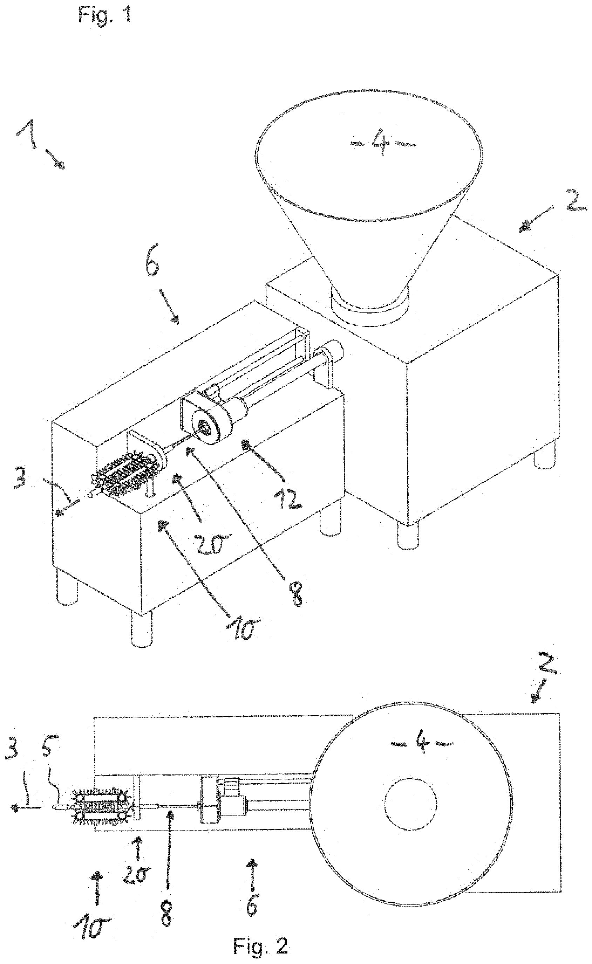

Fig. 1 zeigt eine Anordnung 1 zum Herstellen zum Herstellen von Portionen aus einer mit Masse, insbesondere pastöser Lebensmittel-Masse, gefüllten Hülle, welche eine Füllmaschine 2 mit einem Fülltrichter 4 zum Aufnehmen der Lebensmittel-Masse und mit einer Förderpumpe, eine Abdreheinrichtung 6 mit einem Füllrohr 8 zum Einfüllen der Lebensmittel-Masse 2 in die zu füllende Hülle und eine Portioniervorrichtung 10 aufweist. In nicht zeichnerisch dargestellter Weise können alternativ Füllmaschine und/oder Abdrehvorrichtung und/oder Portioniervorrichtung zu einer kombinierten Maschine zusammengefasst konstruiert sein.

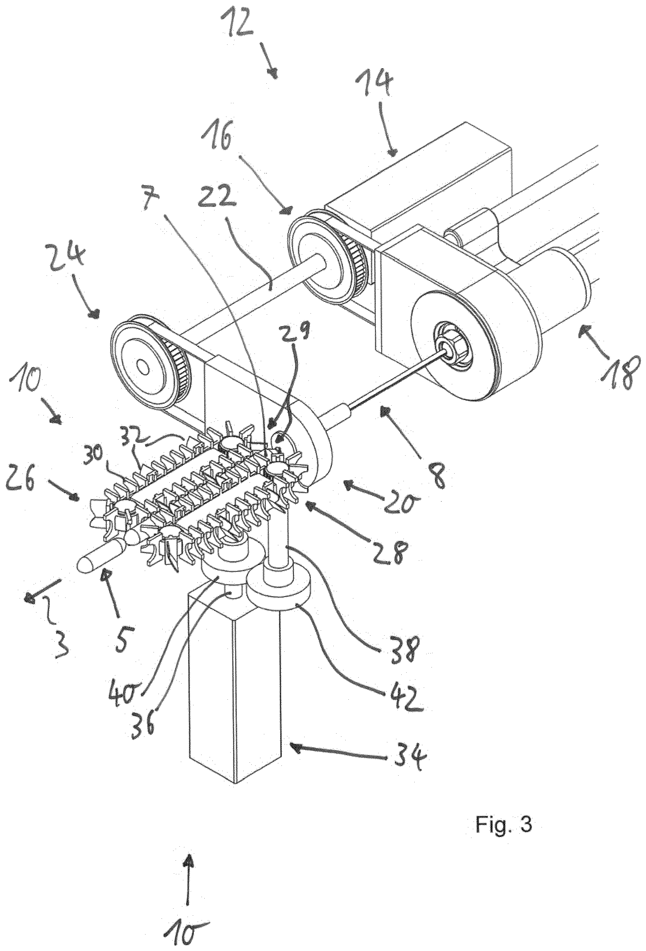

Wie Fig. 1 - 3 zeigt, weist die Abdreheinrichtung 6 eine Antriebseinrichtung 12 mit einem Motor 14 und einem Zahnriemenantrieb 16 auf, sodass das Füllrohr 8 um seine Längsachse rotierend antreibbar ist. Das Füllrohr 8 lässt sich ferner mittels einer Verfahreinrichtung 18 axial verschieben, aus der in Figur 3 gezeigten Position nach rechts, um geraffte Hüllen aus Natur- oder Kunstdarm auf das Füllrohr 8 aufbringen zu können, und dann wieder zurück in die gezeigte Betriebs-Position. Eine Darmbremse 20 ist mittels des Motors 14, einer Welle 22 und einem weiteren Zahnriemenantrieb 24 so antreibbar, dass ein rotierbarer Darmbremsring (nicht gezeigt) synchron zu dem Füllrohr 8 rotier- und antreibbar ist. Im Bereich des Darmbremsringes endet das Füllrohr 8.

Im Betrieb wird eine pastöse Masse wie insbesondere Wurstbrät in die zu füllende Hülle abgegeben, und ein Wurststrang 7 aus Hülle und Wurstbrät bildet sich aus und wird in Transportrichtung 3 transportiert und von der Portioniervorrichtung 10 weiterverarbeitet. Mittels der Abdreheinrichtung 6 und der Portioniervorichtung 10 werden einzelne Portionen, insbesondere längenportionierte einzelne Würstchen-Portionen 5 oder ähnliche Lebensmittelprodukte erzeugt.

Die in Figur 1 bis 8 gezeigte erfindungsgemäße Portioniervorrichtung 10 umfasst zwei Transportbänder 26, 28 mit einer Vielzahl darauf montierter Führungselemente 30 und einiger auf dem Transportband 26, 28 montierter Abteiler 32. Die Transportbänder 26, 28 sind aus einem flexiblem Material oder alternativ als Kette ausgebildet. Führungselemente 30 und Abteiler 32 sind vorzugsweise mittels formschlüssiger Schnapp-Verbindung oder Schraub- oder Nietverbindung mit den Transportbändern 26, 28 gekoppelt. Die Führungselemente 30 stehen seitlich von dem Transportband 26, 28 ab und weisen eine vorzugsweise halbkreisförmige Ausnehmung auf, die an die im Wesentlichen zylindrische Kontur des Wurststrangs 7 und der Würstchen-Portionen 5 angepasst ist, sodass der Wurststrang 7 und die sich bildenden Portionen 5 getragen und geführt, und durch den Kontakt auch hinsichtlich einer Rotation des Wurststranges 7 gebremst werden während des weiteren Transportes in Transportrichtung 3.

Die Portioniervorrichtung 10 weist, wie Figur 3 zeigt, einen Antrieb 34, insbesondere als Elektromotor ausgebildet, eine erste Antriebs-Welle 36 und eine zweite Antriebs-Welle 38 und die beiden Wellen 36, 38 koppelnde Zahnräder 40, 42 auf, sodass die beiden Wellen 36, 38 synchron und gegenläufig angetrieben werden von dem Antrieb 34. Die Wellen 36, 38 weisen an ihrem oberen Ende jeweils ein Zahnrad 44, 46 auf, welche die Transportbänder 26, 28 antreiben. Mittels weiterer zwei Zahnräder 48, 50 sind die Transportbänder 26, 28 zusätzlich gelagert und geführt. In an sich bekannter und nicht im Detail gezeigter Weise sind sämtliche Komponenten der Portioniereinrichtung an einem Gestell, welches mehrere Abschnitte wie Montageplatten aufweisen kann, befestigt.

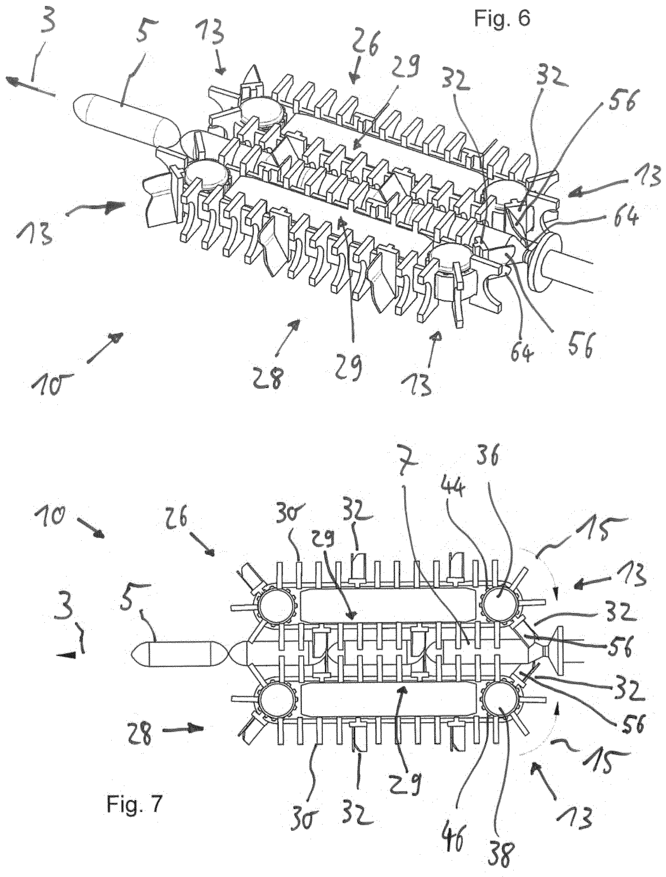

Jedes Transportband 26, 28 weist einen Transportbereich 29 auf, in dem die Komponenten im Betrieb mit dem Wurststrang 7 im Wesentlichen in Transportrichtung 3 bewegt werden, einen ersten Umlenkbereich 13 (Fig. 6 und 7) im Bereich der Wellen 36, 38 und Zahnräder 44, 46 und einen zweiten in Transportrichtung 3 beabstandeten Umlenkbereich 13 im Bereich der Zahnräder 48, 50 auf. Des Weiteren hat jedes Transportband 26, 28 jeweils einen Rücklaufbereich, in welchem die Abschnitte der Transportbänder 26, 28 entgegen der Transportrichtung 3 bewegt werden. Die Transportbänder 26, 28 sind so beabstandet zueinander angeordnet, dass die gefüllte Hülle bzw. der Wurststrang 7 und die sich bildenden Portionen 5 in den Zwischenraum zwischen der Transportbänder 26, 28 gelangen und geführt in Transportrichtung 3 transportiert werden können.

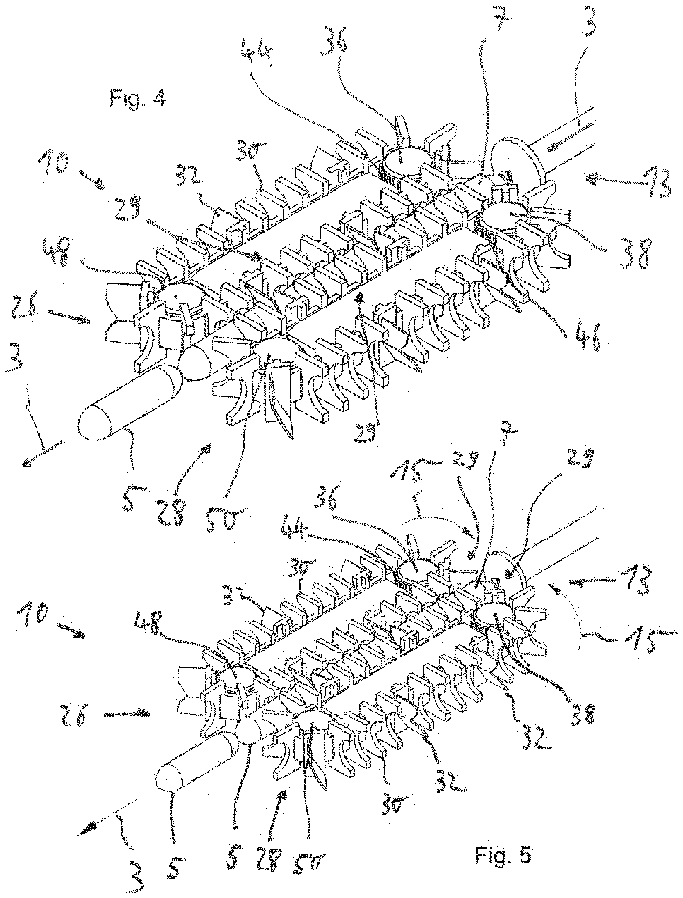

Wie die Figuren 4-7 gut veranschaulichen, sind in bestimmten Abständen zueinander, welche in etwa der Länge einer Portion 5 entsprechen, seitlich von den Transportbändern 26, 28 abstehende Abteiler 32 so angeordnet, dass immer zwei synchron angetriebene und im Umlenkbereich 13 und Transportbereich 29 sich im Wesentlichen gegenüberliegende Abteiler 32 so zusammenwirken können, dass sie im Umlenkbereich 13 sich in Richtung auf den Wurststrang 7 bewegen und mit diesem in Kontakt kommen und eine Einschnürstelle und eine Abdrehstelle ausbilden bzw. beginnen auszubilden.

Die Bewegungsrichtung der Abteiler 32 im Umlenkbereich 13 ist auch durch die Pfeile (Figur 5) veranschaulicht.

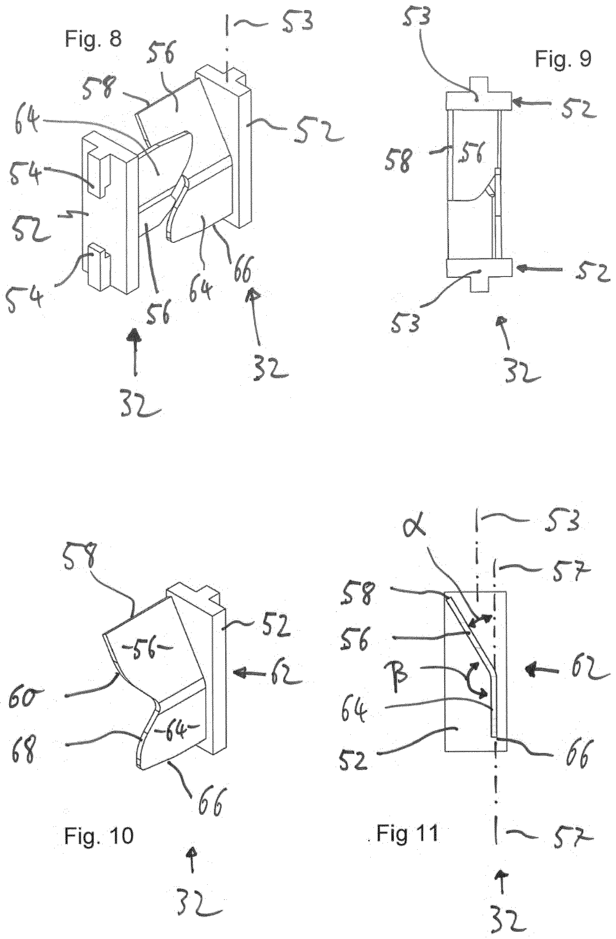

Wie die Figuren 6 bis 11 veranschaulichen, weist jeder Abteiler 32 bevorzugt einen bevorzugt im Wesentlichen plattenförmigen, quaderförmigen Befestigungsabschnitt 52 auf, welcher dazu dient, jeden Abteiler 32 an dem Transportband 26, 28 zu befestigen. Hierzu kann der Befestigungsabschnitt 52 auf seiner Rückseite (Figur 8) zwei Vorsprünge 54 aufweisen, die mit dem Transportband 26, 28 kooperieren können, beispielsweise eine Art Schnappverbindung bilden. Es können auch andere Befestigungsmittel wie Schrauben oder Nieten oder Klebstoff verwendet werden. Jeder Abteiler weist ferner nachfolgend näher beschriebene Einschnürvorsprünge oder -abschnitte 56, 64, auf, welche dazu dienen, mit dem Wurststrang in Kontakt gebracht zu werden, um eine Einschnürstelle und Abdrehstelle zu bilden.

In den Figuren sind die Transportbänder 26, 28 mit den Abteilern 32 in der üblichen Betriebsstellung in Betrieb gezeigt. Die Transportbänder 26, 28 liegen im Wesentlichen in einer horizontalen Ebene, sie können alternativ auch hierzu geneigt angeordnet sein. Die Längsachse 53 des Befestigungsabschnitts 52 ist hier gezeigt und im Betrieb im Wesentlichen vertikal angeordnet. Der Abteiler 32 weist einen - ersten - vorzugsweise plattenförmigen oder lamellaren Einschnürabschnitt 56 auf, welcher, wie beispielsweise die Figuren 8 bis 11 gut veranschaulichen, schräg verläuft, also geneigt ist gegenüber einer vorzugsweise vertikalen Ebene 57 (Fig. 11), welche im normalen Betriebszustand parallel zu der vertikal angeordneten Längsachse 53 angeordnet ist. Die Ebene 57 ist eine theoretische, gedachte Ebene, welche rechtwinklig zur Transportrichtung 3 aufgespannt ist. Der Neigungswinkel α zwischen dem Einschnürabschnitt 56 und der vorzugsweise vertikalen Ebene 57 beträgt im Ausführungsbeispiel exemplarisch etwa 30°, er kann hiervon aber abweichen, beispielsweise um ± 15°. Der Einschnürabschnitt 56 weist einen im Wesentlichen geraden, im Betrieb oberen oder unteren Rand 58 auf, der in Betrieb im Wesentlichen horizontal verläuft, sowie einen weiteren wenigstens teilweise gekrümmten Rand 60, welcher sich in Richtung auf einen mittleren Bereich 62 des Abteilers 32 teilweise gekrümmt und nach innen in Richtung auf den Befestigungsabschnitt 52 hin verläuft. So verjüngt sich der Einschnürabschnitt 56 entlang Rand 60 in Richtung auf einen mittleren Bereich 62 des Abteilers 32. Der im Wesentlichen plattenförmige Einschnürrabschnitt 56 erstreckt sich im Wesentlichen entlang einer Ebene, die geneigt ist gegenüber einer vertikalen Ebene 57, er könnte aber auch statt in einer Ebene zu liegen einen anderen Verlauf, eine andere Kontur oder Form, beispielsweise auch eine gekrümmte Form aufweisen. Auch die Ränder 58, 60 können andere auch gekrümmte Formen aufweisen.

Ein weiterer, zweiter Einschnürabschnitt 64 ist bevorzugt ebenfalls an jedem Abteiler 32 angeordnet und erstreckt sich ausgehend von dem Befestigungsabschnitt 52, im Betrieb radial seitlich abstehend. Der zweite Einschnürabschnitt 64 ist wie exemplarisch gezeigt im normalen Betrieb im Wesentlichen vertikal verlaufend und damit in etwa in der Ebene 57 oder parallel zu einer vorzugsweise vertikalen Ebene 57 angeordnet. Einschnürabschnitt 64 kann alternativ auch mehr oder weniger starke gekrümmte Verläufe aufweisen, und dennoch im Wesentlichen in etwa vertikal verlaufen im Betrieb.

Der erste Einschnürabschnitt 56 und der zweite Einschnürabschnitt 64 sind vorzugsweise in einem Winkel, der abweicht von dem Winkel 180°, relativ zueinander angeordnet und schließen also einen spitzen Winkel zwischen sich ein, der durch den Winkel β (Figur 11) veranschaulicht ist. Winkel β beträgt im Ausführungsbeispiel ungefähr 120°, er kann aber hiervon abweichen, beispielsweise um ± 30°. Der Einschnürabschnitt 64 weist vorzugsweise einen geraden, im Betrieb je nach Anordnung der Abteilers einen oberen oder unteren Rand 66 auf, der im Wesentlichen linear und parallel zu dem Rand 58 des ersten Einschnürabschnitts 56 verläuft, und weist einen zweiten, wenigstens teilweise gekrümmten Rand 68 auf (Figur 10), welcher sich ausgehend von dem Rand 66 in Richtung auf einen mittleren Bereich 62 des Abteilers 32 -radialeinwärts verjüngt. Rand 60 des ersten Einschnürabschnitts 56 und Rand 68 des zweiten Einschnürabschnitts 64 laufen in einem mittleren Bereich 62 zusammen. Dadurch ist durch die beiden Einschnürabschnitte 56 und 64 eine Art Einbuchtung ausgebildet. Insgesamt ist die Größe oder Oberfläche des ersten Einschnürabschnitts 56 größer als die Größe oder Oberfläche des zweiten Einschnürabschnitts 64. Damit ist der Abteiler 32 vorzugsweise asymmetrisch gebildet.

Wie Figur 8 gut veranschaulicht, sind die Abteiler 32 an dem Transportband 26 und die Abteiler 32 an dem Transportband 28 invers um 180° gedreht relativ zueinander angeordnet. Diese Anordnung führt dazu, dass die gegenüberliegenden jeweils ersten Einschnürabschnitte 56 in Transportrichtung 3 vorlaufend sind und ihrerseits einen spitzen Winkel einschließen. Ein hinteres Ende einer Portion 5 wird somit von den spitzwinklig zueinander angeordneten im Wesentlichen plattenförmigen Einschnürabschnitten 56 der zusammenwirkenden Abteiler 32 eingeschlossen in den Transportbereich 29. Die insoweit vorlaufenden ersten Einschnürabschnitte 56 kommen im Betrieb insbesondere mit ihren Rändern 58 und 60 im Umlenkbereich 13 als erstes mit dem Wurststrang 7 in Kontakt und beginnen, eine Einschnürstelle und damit Abrehstelle auszubilden. Die beiden weiteren, zweiten Einschnürabschnitte 64 der zusammenwirkenden Abteiler 32 der benachbarten Transportbänder 26, 28 liegen dann, wenn sie in dem geraden Abschnitt des Transportbereichs bewegt werden, im Wesentlichen in einer Ebene oder in nur wenig beabstandeten Ebenen, sodass sie eine Art Anschlag bilden für ein vorderes Ende oder einen Endabschnitt der sich bildenden oder in der Bildung befindlichen nächsten Portion 5 des Wurststranges 7. Die beiden zusammenwirkenden Abteiler 32 sind insoweit teilweise ineinander verschränkt (Figur 8, aber auch Figuren 6 bis 7), stehen aber vorzugsweise nicht miteinander in Kontakt und bilden im Zentrum im mittleren Bereich 62 einen kleinen Hohlraum oder Spalt zwischen sich aus.

Weitere Merkmale und der Betrieb der erfindungsgemäßen Portioniervorrichtung 10 und der gesamten Anordnung 1 und auch das Verfahren zum Herstellen von Portionen und weitere vorteilhafte Merkmale werden aus dem nachfolgenden Beschreibungen ersichtlich:
(Lebensmittel-) Masse wie Wurstbrät wird aus dem Fülltrichter 4 der Füllmaschine 2 mittels der Förderpumpe durch das Füllrohr 8 in Transportrichtung 3 gefördert und in die auf dem Füllrohr 8 zuvor aufgezogene Hülle (geraffter Darm) im Bereich der Darmbremse 20 der Abdreheinrichtung 6 eingefüllt. Die Förderung kann kontinuierlich oder diskontinuierlich erfolgen. Es wird ein vorzugsweise rotierender Wurststrang 7 ausgebildet (Figur 4), welcher in den Bereich der Portioniervorrichtung 10 in den Transportbereich der Transportbänder 26, 28 gelangt.

Zwei kooperierende Abteiler 32 der gegenüberliegenden Transportbänder 26, 28 gelangen auf ihrer Kreisbahn im Umlenkbereich 13 mit Abschnitten des jeweils ersten Einschnürabschnitts 56, welcher im Wesentlichen schräg nach vorne in Bewegungsrichtung und gegenüber einer vertikalen Ebene geneigt angeordnet ist, insbesondere mit auch Teilen der Ränder 58, 60 und der in Transportrichtung vorderen Oberfläche in Kontakt und in Eingriff mit dem Wurststrang 7. Dabei haben die in Kontakt kommenden Abschnitte aufgrund des radialen Abstandes von der Drehachse der Wellen 36, 38 eine erhöhte Umfangsgeschwindigkeit im Vergleich zu der Geschwindigkeit der Abteiler 32 und der Transportbänder 26, 28 im linearen Abschnitt des Transportbereichs 29. Dadurch kommt es zu einem - eingangs beschriebenen - "Schaufeleffekt". Wie Figur 7 veranschaulicht, kommen die beiden Einschnürabschnitte 56 der zusammenwirkenden Abteiler 32 mehr oder weniger gleichzeitig in Eingriff mit dem Wurststrang 7. Während der weiteren Bewegung in Transportrichtung 3 kommen die zusammenwirkenden Abteiler 32 in eine - genau - gegenüberliegende Stellung, die etwa in Figur 8 gezeigt ist. Das vordere Ende der nachfolgend sich bildenden und teilweise im weiteren Verlauf sich bildenden Abdrehstelle an der nachfolgenden Portion ist teilweise in Anlage mit den rückseitigen Oberflächen der zweiten Einschnürabschnitte 64 der beiden Abteiler 32, die vorzugsweise im Wesentlichen in etwa in einer vertikalen Ebene angeordnet sind. Dem gegenüber ist oder kommt das nachlaufende hintere Ende der gebildeten Portion 5 teilweise in Kontakt mit den vorderen Oberflächen der ersten Einschnürabschnitte 56. Die Rotation der sich so bildenden Portion 5 wird während oder nach einem weiteren Durchlaufen in Transportrichtung 3, beispielsweise und vorzugsweise entlang einer Strecke in Transportrichtung 3 von 20 mm ± 5 mm reduziert, wobei diese Werte in Abhängigkeit von der Länge der Portion 5 variiert werden können. Schließlich gelangen die Portionen3 in einen Zustand, in dem sie nicht mehr oder nur noch sehr wenig um die Längsachse der Portion 5 rotieren und schließlich ganz stillstehen. So bildet sich zwischen den Portionen 5 jeweils eine Abdrehstelle.

### Bezugszeichenliste

- 1: Anordnung
- 2: Füllmaschine
- 3: Transportrichtung
- 4: Fülltrichter
- 5: Würstchen-Portion
- 6: Abdreheinrichtung
- 7: Wurststrang
- 8: Füllrohr
- 10: Portioniervorrichtung
- 12: Antriebseinrichtung
- 13: Umlenkbereich
- 14: Motor
- 16: Zahnriemenantrieb
- 18: Verfahreinrichtung
- 20: Darmbremse
- 22: Welle
- 24: Zahnriemenantrieb
- 26, 28: Transportband
- 29: Transportbereich
- 30: Führungselement
- 32: Abteiler
- 34: Antrieb
- 36, 38: Antriebs-Welle
- 40, 42: Zahnrad
- 44, 46: Zahnrad
- 48, 50: Zahnrad
- 52: Befestigungsabschnitt
- 53: Längsachse
- 54: Vorsprrung
- 56: erster Einschnürabschnitt
- 57: Ebene
- 58: Rand
- 60: Rand
- 62: mittlerer Bereich
- 64: zweiter Einschnürabschnitt
- 66: Rand
- 68: Rand
- α: Neigungswinkel
- β: Winkel

## Patentansprüche

1. Portioniervorrichtung (10) zum Portionieren und Transportieren von mit Masse befüllten, länglichen Hüllen, insbesondere mit Wurstbrät gefüllte Kunst- oder Naturdärme, mit zwei benachbart zueinander angeordneten, mittels mindestens eines Antriebs (34) antreibbaren umlaufenden Transportbändern (26, 28) zum Transportieren der befüllten Hülle,
wobei jedes Transportband (26, 28) einen Transportbereich (29) aufweist, welcher im Betrieb in eine Transportrichtung (3) bewegt wird, und einem Rücklaufbereich, wobei die gefüllte Hülle zwischen die Transportbereiche (29) der beiden Transportbänder (26, 28) eingebracht und dann in Transportrichtung (3) transportiert werden können,
mindestens einem an jedem Transportband (26, 28) angeordneten seitlich von dem Transportband (26, 28) abstehenden Abteiler (32), wobei der Abteiler (32) einen ersten plattenförmigen
Einschnürabschnitt (56) zum in Eingriff Bringen mit der gefüllten Hülle und einen zweiten plattenförmigen
Einschnürabschnitt (64) aufweist,
wobei zwei Abteiler (32) der benachbarten Transportbänder (26, 28) so im Transportbereich (29) zusammenwirken, dass die gefüllte Hülle eingeschnürt wird, **dadurch gekennzeichnet, dass** der erste plattenförmige Einschnürabschnitt (56) im Betrieb im Wesentlichen schräg gegenüber einer rechtwinklig zur Transportrichtung (3) aufgespannten Ebene (57) verläuft, und
der erste plattenförmige Einschnürabschnitt (56) und der zweite plattenförmige Einschnürabschnitt (64) einen Winkel von 150° ± 15° einschließen.

2. Portioniervorrichtung (10) nach Anspruch 1,
**dadurch gekennzeichnet, dass** der erste Einschnürabschnitt (56) im Betrieb im Wesentlichen in einem Winkel von etwa 30° +/- 15° gegenüber der rechtwinklig zur Transportrichtung (3) aufgespannten Ebene (57) geneigt ist.

3. Portioniervorrichtung (10) nach Anspruch 1 oder 2,
**dadurch gekennzeichnet, dass** der zweite Einschnürabschnitt (64) sich im Betrieb im Wesentlichen entlang einer vertikalen Ebene (57) erstreckt.

4. Portioniervorrichtung (10) nach mindestens einem der vorstehenden Ansprüche,
**dadurch gekennzeichnet, dass** der erste und zweite Einschnürabschnitt (64) sich ausgehend von einem unteren bzw. oberen Randabschnitt in Richtung auf einen die Einschnürabschnitte (56, 64) verbindenden mittleren Bereich (62) hin verjüngen.

5. Portioniervorrichtung (10) nach einem der vorstehenden Ansprüche,
**dadurch gekennzeichnet, dass** der erste Einschnürabschnitt (56) relativ zu dem zweiten Einschnürabschnitt (64) eine größere oder im Wesentlichen gleich große Oberfläche aufweist.

6. Portioniervorrichtung (10) nach einem der vorstehenden Ansprüche,
**dadurch gekennzeichnet, dass** die an dem Transportband (26, 28) angeordneten Abteiler (32) durch jeweils einen Umlenkbereich (13) der Transportbänder (26, 28) im Wesentlichen auf einer Kreisbahn aufeinander zu bewegbar sind und durch in Eingriff kommen mit der wenigstens teilweise um die Längsachse rotierenden befüllten Hülle eine Abdrehstelle bilden,
wobei sich an den Umlenkbereich (13) ein im Wesentlichen geradliniger Abschnitt des Transportbereichs (29) anschließt.

7. Portioniervorrichtung (10) nach mindestens einem der vorstehenden Ansprüche, **dadurch gekennzeichnet, dass** die zwei kooperierenden Abteiler (32) der benachbarten Transportbänder (26, 28) so ausgebildet sind, dass die ersten schräg verlaufenden Einschnürabschnitte (56) der Abteiler (32) in Transportrichtung (29) gesehen jeweils vorlaufen und die zweiten Einschnürabschnitte (64) jeweils nachlaufen.

8. Portioniervorrichtung (10) nach mindestens einem der vorstehenden Ansprüche, **dadurch gekennzeichnet, dass** die beiden ersten Einschnürabschnitte (56) der zusammenwirkenden Abteiler (32) im Transportbereich (29) im Wesentlichen in einem Winkel relativ zueinander angeordnet sind, wobei der Winkel vorzugsweise 120° ± 30° beträgt.

9. Portioniervorrichtung (10) nach mindestens einem der vorstehenden Ansprüche, **dadurch gekennzeichnet, dass** die zweiten Einschnürabschnitte (64) der zusammenwirkenden Abteiler (32) im Transportbereich (29) wenigstens teilweise im Wesentlichen innerhalb einer im Wesentlichen senkrecht verlaufenden Ebene (57) oder in parallelen im Wesentlich senkrecht verlaufenden Ebenen (57) angeordnet sind.

10. Portioniervorrichtung (10) nach mindestens einem der vorstehenden Ansprüche, **dadurch gekennzeichnet, dass** der erste und zweite Einschnürabschnitt (56, 64) und der Befestigungsabschnitt (52) im Wesentlichen plattenförmig ausgebildet sind und der plattenförmige Befestigungsabschnitt (52) im Wesentlichen eine rechteckige Form aufweist und im Wesentlichen parallel zu dem benachbarten Transportband (26, 28) verläuft .

11. Portioniervorrichtung (10) nach mindestens einem der vorstehenden Ansprüche, **dadurch gekennzeichnet, dass** der Abteiler (32) als im Wesentlichen integrales Bauteil, vorzugsweise aus einem Metall- oder Kunststoff, ausgebildet ist, wobei vorzugsweise der Abteiler (32) einen Befestigungsabschnitt (52) zum Befestigen an einem Transportband (26, 28) aufweist.

12. Portioniervorrichtung (10) nach mindestens einem der vorstehenden Ansprüche, **dadurch gekennzeichnet, dass** die Abteiler (32) so ausgebildet sind, dass im Betrieb zwei miteinander zusammenwirkende Abteiler (32) der jeweiligen Transportbänder (26, 28) im Einlaufbereich zunächst mit ihren jeweiligen schrägverlaufenden ersten plattenförmigen Einschnürabschnitten (56) mit der gefüllten Hülle in Eingriff kommen und bei weiterer Reduktion des Abstandes der kooperierenden Abteiler (32) relativ zueinander die Abdrehstelle ausbilden.

13. Portioniervorrichtung (10) nach mindestens einem der vorstehenden Ansprüche, **dadurch gekennzeichnet, dass** erster und zweiter Einschnürabschnitt (56, 64) der beiden kooperierenden Abteiler (32) so ausgebildet und dimensioniert sind, dass sie im Betrieb im Transportbereich (29) in einem zentralen Einbuchtungsbereich einen geringen Abstand zueinander aufweisen unter Ausbildung eines Hohlraumes zwischen den Abteilern (32).

14. Portioniervorrichtung (10) nach mindestens einem der vorstehenden Ansprüche, **dadurch gekennzeichnet, dass** die beiden kooperierenden Abteiler (32) im Wesentlichen gleich ausgebildet sind, aber invers um 180° versetzt zueinander an den Transportbändern (26, 28) positioniert sind.

15. Portioniervorrichtung (10) nach mindestens einem der vorstehenden Ansprüche, **dadurch gekennzeichnet, dass** an jedem Transportband (26, 28) zwischen in Länge einer zu produzierenden Würstchen-Portion (5) beabstandeten, benachbarten Abteilern mehrere Führungselemente angeordnet sind, die im Betrieb die gefüllte Hülle stützen.

16. Abteiler für eine Portioniervorrichtung (10), vorzugsweise nach einem der vorstehenden Ansprüche,
**dadurch gekennzeichnet, dass** der Abteiler (32) einen ersten plattenförmigen Einschnürabschnitt (56) aufweist, welcher im Betrieb im Wesentlichen schräg verläuft gegenüber einer rechtwinklig zur Transportrichtung (3) aufgespannten Ebene (57), und
einen zweiten plattenförmigen Einschnürabschnitt (64) aufweist, wobei der erste plattenförmige Einschnürabschnitt (56) und der zweite plattenförmige Einschnürabschnitt (64) einen Winkel von 150° ± 15° einschließen.

17. Anordnung zum Herstellen von Portionen (5) aus einer mit Lebensmittel-Masse zu füllenden Hülle,
mit einer Füllmaschine (2), welche einen Fülltrichter (4) zum Aufnehmen der Lebensmittel-Masse und eine Förderpumpe aufweist,
einer Abdreheinrichtung mit einem Füllrohr (8) zum Einfüllen der Lebensmittel-Masse mittels der Füllmaschine (2) in die zu füllende Hülle und
einer Portioniervorrichtung (10) nach mindestens einem der vorstehenden Ansprüche 1-15.

18. Verfahren zum Herstellen von Portionen (5) in einer mit Lebensmittel-Masse gefüllten Hülle, insbesondere mit Wurstbrät gefüllte Kunst- oder Naturdärme,
bei dem Lebensmittel-Masse mit einer Füllmaschine (2) und einer Abdrehvorrichtung in die zu befüllende Hülle eingefüllt wird und
die gefüllte, um ihre Längsachse rotierende Hülle in den Einlauf- und Transportbereich (29) einer Portioniervorrichtung (10), vorzugsweise gemäß einem der vorstehenden Ansprüche 1-15, transportiert wird, wobei die Portioniervorrichtung (10) zwei beabstandete Transportbänder (26, 28) mit jeweils mindestens einen an diesen befestigten Abteiler (32) aufweist, und
die gefüllte Hülle in einem Einlaufbereich von aufeinander zu bewegten zusammenwirkenden Abteilern (32) jeweils eines der Transportbänder (26, 28) erfasst wird zur Ausbildung einer Abdrehstelle,
**dadurch gekennzeichnet, dass** der Abteiler (32) jeweils einen ersten plattenförmigen Einschnürabschnitt (56) aufweist, welcher im Betrieb im Wesentlichen schräg verläuft gegenüber einer rechtwinklig zur Transportrichtung aufgespannten Ebene (57), und einen zweiten plattenförmigen
Einschnürabschnitt (64) aufweist, wobei der erste plattenförmige Einschnürabschnitt (56) und der zweite plattenförmige Einschnürabschnitt (64) einen Winkel von 150° ± 15° einschließen.

## Claims

1. A portioning device (10) for portioning and conveying elongate casings stuffed with a mass, in particular synthetic or natural gut casings stuffed with sausage meat, comprising two circulating conveyor belts (26, 28) arranged adjacently to each other for conveying the stuffed casing and which are drivable by at least one drive means (34), wherein each conveyor belt (26, 28) has a conveying area (29) which in operation is moved in a conveying direction (3), and a return area, wherein the stuffed casing is introduced between the conveying areas of the two conveyor belts and can then be conveyed in the conveying direction,
at least one divider (32) arranged on each conveyor belt (26, 28) and projecting laterally from the conveyor belt (26, 28), wherein the divider (32) has a first plate-shaped constriction portion (56) for engaging with the stuffed casing and a second plate-shaped constriction portion (64),
wherein two dividers (32) of the adjacent conveyor belts (26, 28) cooperate in the conveying area (29) in such a way that the stuffed casing is constricted,
**characterized in that** the first plate-shaped constriction portion (56) extends in operation substantially at a slant relative to a plane (57) defined as perpendicular to the conveying direction (3), and
the first plate-shaped constriction portion (56) and the second plate-shaped constriction portion (64) substantially enclose an angle of 150° ± 15°.

2. The portioning device (10) according to claim 1,
**characterized in that**, in operation, the first constriction portion (56) is substantially slanted at an angle of about 30° +/- 15° relative to the plane defined as perpendicular to the conveying direction (3).

3. The portioning device (10) according to claim 1 or 2,
**characterized in that** the second constriction portion (64) extends in operation substantially along a vertical plane (57).

4. The portioning device (10) according to at least one of the preceding claims,
**characterized in that** the first and second constriction portion (64) taper from a lower or upper edge portion towards a middle region (62) connecting the constriction portions (56, 64).

5. The portioning device (10) according to any one of the preceding claims,
**characterized in that** the first constriction portion (56) has a larger or substantially equally large surface relative to the second constriction portion (64).

6. The portioning device (10) according to any one of the preceding claims,
**characterized in that** the dividers (32) arranged on the conveyor belt (26, 28) can each be moved substantially on a circular path towards each other by a deflection region (13) of the conveyor belts (26, 28) and form a twist point by engaging with the stuffed casing that rotates at least partially about its longitudinal axis,
wherein a substantially straight section of the conveying area (29) adjoins the deflection region (13).

7. The portioning device (10) according to at least one of the preceding claims,
**characterized in that** the two cooperating dividers (32) of the adjacent conveyor belts (26, 28) are so designed that the first slanting constriction portions (56) of the dividers (32) each run ahead and the second constriction portions (64) each run behind when viewed in the conveying direction (29).

8. The portioning device (10) according to at least one of the preceding claims,
**characterized in that** the two first constriction portions (56) of the cooperating dividers (32) are arranged in the conveying area (29) substantially at an angle to each other, said angle preferably being 120° ± 30°.

9. The portioning device (10) according to at least one of the preceding claims,
**characterized in that** the second constriction portions (64) of the cooperating dividers (32) are arranged in the conveying area (29) at least partly substantially within a substantially perpendicular plane (57) or in parallel substantially perpendicular planes (57).

10. The portioning device (10) according to at least one of the preceding claims,
**characterized in that** the first and second constriction portion (56, 64) and the fixing portion (52) are substantially plate-shaped and the plate-shaped fixing portion (52) is substantially rectangular in shape and extends substantially parallel to the adjacent conveyor belt (26, 28).

11. The portioning device (10) according to at least one of the preceding claims,
**characterized in that** the divider (32) is designed as a substantially integral component preferably made of a metal or plastic, wherein the divider (32) preferably has a fixing portion (52) for fixing to a conveyor belt (26, 28).

12. The portioning device (10) according to at least one of the preceding claims,
**characterized in that** the dividers (32) are so designed that, in operation, two mutually cooperating dividers (32) of the respective conveyor belts (26, 28) initially engage the stuffed casing in the infeed area by means of their respective slanting first plate-shaped constriction portions (56) and form the twist point upon further reduction of the spacing between the cooperating dividers (32) relative to each other.

13. The portioning device (10) according to at least one of the preceding claims,
**characterized in that** the first and second constriction portion (56, 64) of the two cooperating dividers (32) are so designed and dimensioned that, in the conveying area (29) during operation, they have a small spacing between each other in a central indentation region so as to form a cavity between the dividers (32).

14. The portioning device (10) according to at least one of the preceding claims,
**characterized in that** the two cooperating dividers (32) are substantially identical in design, but are inversely positioned on the conveyor belts (26, 28) with a 180° offset from each other.

15. The portioning device (10) according to at least one of the preceding claims,
**characterized in that** a plurality of guide members that support the stuffed casing during operation are arranged at each conveyor belt (26, 28) between adjacent dividers spaced apart by the length of a sausage portion (5) to be produced.

16. A divider of a portioning device (10) preferably according to one of the preceding claims,
**characterized in that** the divider (32) has a first plate-shaped constriction portion (56) which in operation extends substantially at a slant relative to a plane (57) defined as perpendicular to the conveying direction (3), and
a second plate-shaped constriction portion (64), wherein the first plate-shaped constriction portion (56) and the second plate-shaped constriction portion (64) substantially enclose an angle of 150° ± 15°.

17. An assembly for producing portions (5) from a casing to be stuffed with a food mass, comprising a stuffing machine (2) which has a feeding hopper (4), for receiving the food mass, and a feed pump,
a twist linking unit having a stuffing tube (8) for stuffing the food mass by means of the stuffing machine (2) into the casing to be stuffed and
a portioning device (10) according to at least one of the preceding claims 1-15.

18. A method for producing portions (5) in a casing stuffed with a food mass, in particular in synthetic or natural gut casings stuffed with sausage meat,
in which method food mass is stuffed by means of a stuffing machine (2) and a twist linking unit into the casing to be stuffed, and
the stuffed casing rotating about its longitudinal axis is conveyed into the infeed and conveying area (29) of a portioning device (10), preferably according to any one of the preceding claims 1-15, wherein the portioning device (10) has two spaced-apart conveyor belts (26, 28) each having at least one divider (32) fixed thereto, and
the stuffed casing is gripped in an infeed area by cooperating dividers (32) of each of the conveyor belts (26, 28), which are moved towards one another, in order to form a twist point,
**characterized in that** the divider (32) has a first plate-shaped constriction portion (56) which in operation extends substantially at a slant relative to a plane (57) defined as perpendicular to the conveying direction (3), and a second plate-shaped constriction portion (64), wherein the first plate-shaped constriction portion (56) and the second plate-shaped constriction portion (64) substantially enclose an angle of 150° ± 15°.

## Revendications

1. Dispositif de division en portions (10) pour diviser en portions et pour transporter des enveloppes allongées, remplies de matière, en particulier des boyaux synthétiques ou naturels remplis de chair à saucisse, avec deux bandes transporteuses (26, 28) circulant en périphérie disposées de manière adjacente l'une par rapport à l'autre, pouvant être entraînées au moyen d'au moins un entraînement (34), pour transporter l'enveloppe remplie,
dans lequel chaque bande transporteuse (26, 28) présente une zone de transport (29), laquelle est déplacée en fonctionnement dans une direction de transport (3), et une zone de retour, dans lequel l'enveloppe remplie peut être introduite entre les zones de transport (29) des deux bandes transporteuses (26, 28) puis être transportée dans la direction de transport (3),
au moins un séparateur (32) disposé sur chaque bande transporteuse (26, 28), dépassant latéralement de la bande transporteuse (26, 28), dans lequel le séparateur (32) présente une première section de resserrement (56) destinée à venir en prise avec l'enveloppe remplie et une deuxième section de resserrement (64),
dans lequel deux séparateurs (32) des bandes transporteuses (26, 28) adjacentes coopèrent de telle sorte dans la zone de transport (29) que l'enveloppe remplie est resserrée,
**caractérisé en ce que** la section de resserrement (56) en forme de plaque s'étend en fonctionnement sensiblement à l'oblique par rapport à un plan (57) formé à angle droit par rapport à la direction de transport (3), et
la première section de resserrement (56) en forme de plaque et la deuxième section de resserrement (64) en forme de plaque forment un angle de 150° ± 15°.

2. Dispositif de division en portions (10) selon la revendication 1,
**caractérisé en ce que** la première section de resserrement (56) est inclinée en fonctionnement sensiblement selon un angle d'environ 30° +/- 15° par rapport au plan (57) formé à angle droit par rapport à la direction de transport (3).

3. Dispositif de division en portions (10) selon la revendication 1 ou 2,
**caractérisé en ce que** la deuxième section de resserrement (64) s'étend en fonctionnement sensiblement le long d'un plan (57) vertical.

4. Dispositif de division en portions (10) selon au moins l'une quelconque des revendications précédentes, **caractérisé en ce que** la première et la deuxième section de resserrement (64) se rétrécissent en direction d'une zone centrale (62) reliant les sections de resserrement (56, 64) en partant d'une section de bord inférieure ou supérieure.

5. Dispositif de division en portions (10) selon l'une quelconque des revendications précédentes,
**caractérisé en ce que** la première section de resserrement (56) présente, par rapport à la deuxième section de resserrement (64), une surface plus grande ou sensiblement de même dimension.

6. Dispositif de division en portions (10) selon l'une quelconque des revendications précédentes,
**caractérisé en ce que** les séparateurs (32) disposés sur la bande transporteuse (26, 28) peuvent être déplacés les uns vers les autres sensiblement sur une trajectoire à travers respectivement une zone de renvoi (13) des bandes transporteuses (26, 28) et forment un point de torsion en venant en prise avec l'enveloppe remplie tournant au moins en partie autour de l'axe longitudinal,
dans lequel une section sensiblement rectiligne de la zone de transport (29) se raccorde à la zone de renvoi (13) .

7. Dispositif de division en portions (10) selon au moins l'une quelconque des revendications précédentes,
**caractérisé en ce que** les deux séparateurs (32) qui coopèrent des bandes transporteuses (26, 28) adjacentes sont réalisés de telle sorte que les premières sections de resserrement (56) s'étendant à l'oblique des séparateurs (32) vues dans la direction de transport (29) sont respectivement antérieures et les deuxièmes sections de resserrement (64) sont respectivement postérieures.

8. Dispositif de division en portions (10) selon au moins l'une quelconque des revendications précédentes,
**caractérisé en ce que** les deux premières sections de resserrement (56) des séparateurs (32) qui coopèrent sont disposées dans la zone de transport (29) sensiblement selon un angle l'une par rapport à l'autre, dans lequel l'angle est de préférence de 120° ± 30°.

9. Dispositif de division en portions (10) selon au moins l'une quelconque des revendications précédentes,
**caractérisé en ce que** les deuxièmes sections de resserrement (64) des séparateurs (32) qui coopèrent sont disposées dans la zone de transport (29) au moins en partie sensiblement à l'intérieur d'un plan (57) s'étendant de manière sensiblement perpendiculaire ou dans des plans (57) parallèles s'étendant de manière sensiblement perpendiculaire.

10. Dispositif de division en portions (10) selon au moins l'une quelconque des revendications précédentes, **caractérisé en ce que** la première et la deuxième section de resserrement (56, 64) et la section de fixation (52) sont réalisées sensiblement en forme de plaque, et la section de fixation (52) en forme de plaque présente sensiblement une forme rectangulaire et s'étend de manière sensiblement parallèle par rapport à la bande transporteuse (26, 28) adjacente.

11. Dispositif de division en portions (10) selon au moins l'une quelconque des revendications précédentes, **caractérisé en ce que** le séparateur (32) est réalisé en tant que composant sensiblement intégral, de préférence à partir d'un matériau en métal ou en plastique, dans lequel de préférence le séparateur (32) présente une section de fixation (52) destinée à être fixée sur une bande transporteuse (26, 28).

12. Dispositif de division en portions (10) selon au moins l'une quelconque des revendications précédentes,
**caractérisé en ce que** les séparateurs (32) sont réalisés de telle sorte que lors du fonctionnement deux séparateurs (32) coopérant entre eux des bandes transporteuses (26, 28) respectives viennent en prise dans la zone d'admission d'abord par leurs premières sections de resserrement (56) respectives en forme de plaque s'étendant à l'oblique avec l'enveloppe remplie et réalisent le point de torsion alors que l'espacement entre les séparateurs (32) qui coopèrent l'un par rapport à l'autre continue à se réduire.

13. Dispositif de division en portions (10) selon au moins l'une quelconque des revendications précédentes,
**caractérisé en ce que** la première et la deuxième section de resserrement (56, 64) des deux séparateurs (32) qui coopèrent sont réalisées et dimensionnées de telle sorte qu'elles présentent l'une par rapport à l'autre un espacement inférieur dans une zone de renfoncement centrale en fonctionnement dans la zone de transport (29) tout en réalisant un espace creux entre les séparateurs (32).

14. Dispositif de division en portions (10) selon au moins l'une quelconque des revendications précédentes,
**caractérisé en ce que** les deux séparateurs (32) qui coopèrent sont réalisés de manière sensiblement identique, sont toutefois positionnés inversement avec un décalage l'un par rapport à l'autre de 180° sur les bandes transporteuses (26, 28).

15. Dispositif de division en portions (10) selon au moins l'une quelconque des revendications précédentes,
**caractérisé en ce que** sont disposés, sur chaque bande transporteuse (26, 28), entre des séparateurs adjacents, espacés le long d'une portion de saucisse (5) à produire, plusieurs éléments de guidage qui supportent en fonctionnement l'enveloppe remplie.

16. Séparateur pour un dispositif de division en portions (10) selon l'une quelconque des revendications précédentes,
**caractérisé en ce que** le séparateur (32) présente une première section de resserrement (56), laquelle s'étend en fonctionnement sensiblement à l'oblique par rapport à un plan (57) formé à angle droit par rapport à la direction de transport (3), et
présente une deuxième section de resserrement (64), dans lequel la première section de resserrement (56) en forme de plaque et la deuxième section de resserrement (64) en forme de plaque forment un angle de 150° ± 15°.

17. Ensemble pour fabriquer des portions (5) à partir d'une enveloppe à remplir de matière de produit alimentaire,
avec une remplisseuse (2), laquelle présente une trémie de remplissage (4) destinée à recevoir la matière de produit alimentaire et une pompe de refoulement,
un système de torsion avec un tuyau de remplissage (8) destiné à transvaser la matière de produit alimentaire au moyen de la remplisseuse (2) dans l'enveloppe à remplir, et
un dispositif de division en portions (10) selon au moins l'une quelconque des revendications 1 - 15.

18. Procédé pour fabriquer des portions (5) dans une enveloppe remplie de matière de produit alimentaire, en particulier avec du boyau synthétique ou naturel rempli de chair à saucisse,
où de la matière de produit alimentaire est transvasée dans l'enveloppe à remplir avec une remplisseuse (2) et un dispositif de torsion, et
l'enveloppe remplie tournée autour de son axe longitudinal est transportée dans la zone d'admission et de transport (29) d'un dispositif de division en portions (10), de préférence selon l'une quelconque des revendications précédentes 1 - 15, dans lequel le dispositif de division en portions (10) présente deux bandes transporteuses (26, 28) espacées avec respectivement au moins un séparateur (32) fixé sur celles-ci, et
l'enveloppe remplie est saisie dans une zone d'admission par des séparateurs (32) qui coopèrent, déplacés l'un vers l'autre, respectivement d'une des bandes transporteuses (26, 28) pour réaliser un point de torsion,
**caractérisé en ce que** le séparateur (32) présente respectivement une première section de resserrement (56), laquelle s'étend en fonctionnement sensiblement à l'oblique par rapport à un plan (57) formé à angle droit par rapport à la direction de transport, et présente une deuxième section de resserrement (64), dans lequel la première section de resserrement (56) en forme de plaque et la deuxième section de resserrement (64) en forme de plaque forment un angle de 150° ± 15°.
